# FASCICULE DE BREVET EUROPEEN

(11) **EP 2 028 923 B1**
(45) Date de publication et mention de la délivrance du brevet: **24.02.2010**
(21) Numéro de dépôt: 07788904.6
(22) Date de dépôt: 19.06.2007
(51) Int. Cl.: A01G 11/00, F04B 39/06

(54) **PROCEDE ET DISPOSITIF DE DESINFECTION DES SOLS PAR GENERATION D'AIR COMPRIME CHAUD HUMIDIFIE**
VERFAHREN UND VORRICHTUNG ZUR DESINFEKTION VON BÖDEN DURCH ERZEUGUNG FEUCHTER UND HEISSER DRUCKLUFT
METHOD AND DEVICE FOR DISINFECTING FLOORS BY GENERATING HUMIDIFIED HOT COMPRESSED AIR

(30) Priorité: 19.06.2006 FR 0605413
(43) Date de publication de la demande: 04.03.2009
(73) Titulaire: Negre, Guy, 06270 Villeneuve Loubet (FR)
(72) Inventeur: NEGRE, Guy, 06270 Villeneuve Loubet (FR); NEGRE, Cyril, 06516 Carros Cedex (FR)
(74) Mandataire: Kohn, Philippe
(86) Numéro de dépôt international: PCT/FR2007/001013
(87) Numéro de publication internationale: WO 2007/147967

(56) Documents cités:
- EP-A- 1 479 287
- WO-A-99/21418
- FR-A1- 2 862 349
- US-A- 3 704 079
- US-A1- 2006 037 567

## Description

L'invention concerne un concept d'assainissement et de désinfection des sols.

On sait que les organismes pathologiques tels que les nématodes, les vers, moisissures et pathogènes bactériens contenus dans le sol causent des dommages économiques considérables aux récoltes.

Pour désinfecter les sols, il est utilisé couramment des pesticides chimiques, et des produits phytosanitaires ou encore du bromure de méthyle, produits hautement nocifs qui polluent l'environnement et les nappes phréatiques.

Pour remédier aux inconvénients de ces produits nocifs il a été proposé dans un brevet américain 5,259,327 un dispositif permettant d'injecter de l'eau chaude dans le sol de même que FR-A-2383.601 montre un dispositif sans collecteur avec un générateur embarqué.

L'utilisation d'eau chaude et/ou de vapeur d'eau nécessite des appareillages importants, si la chaudière est embarquée, elle est de taille et de puissance limitée en raison de son poids, si la chaudière est extérieure il est nécessaire de transporter la vapeur dans des tuyaux sur de longue distance et de perdre ainsi de nombreuses calories. En outre les chaudières sont gourmandes en énergie et grandes consommatrices de carburant.

Selon cette technique connue, la température de vapeur introduite dans le sol se doit d'être sensiblement aux environ de 100 °C afin de permettre la destruction des organismes pathologiques sans rendre le sol stérile.

La Société VERDIVAP est détentrice d'un brevet EP 1 479 287 A1 au contenu duquel on pourra se reporter, qui décrit un dispositif de désinfection des sols comportant notamment un châssis destiné à être déplacé sur le sol, des dents destinées à pénétrer dans le sol, et un générateur de vapeur d'eau externe relié au châssis par des tuyaux, ce dispositif se présentant sous la forme d'un traîneau mobile tracté, permettant une bonne homogénéité de diffusion.

Le procédé de désinfection des sols selon l'invention propose une solution légère et économique et est caractérisé par les moyens mis en oeuvre pris aussi bien dans leur ensemble que séparément et plus particulièrement.

Ces Procédé et Dispositif sont définis aux revendications annexées.

La désinfection du sol est ainsi effectuée par injection dans le sol d'air chaud humidifié produit par un générateur, embarqué ou non, dans lequel l'air chaud est produit par compression dans une machine volumétrique, et l'air chaud comprimé est humidifié par injection de liquide.

Le procédé selon l'invention, contrairement aux enseignements de l'art antérieur, ne produit aucune vapeur à partir d'eau que l'on chauffe ou que l'on surchauffe, mais fait appel à de l'air ambiant qui est chauffé, puis humidifié

Le générateur selon l'invention permet une grande adaptabilité aux conditions d'utilisation, et notamment de régler en plus ou en moins le débit de sortie ainsi que l'humidité absolue de l'air en fonction de l'état des sols à traiter et de leur degré d'humidité.

Préférentiellement, le générateur selon l'invention est constitué de deux cylindres de diamètre différent l'un de grand diamètre dans lequel l'air atmosphérique est aspiré puis comprimé dans une chambre de compression à une pression et une température suffisante pour permettre ensuite la vaporisation quasi instantanée d'une dose de liquide, l'autre cylindre, en regard de ladite chambre de compression et de vaporisation, de plus petit diamètre dans lequel la charge d'air comprimé humidifié sera partiellement détendu pour être ramenée à la pression et la température d'utilisation choisie.

Pour fixer les idées et ce à titre d'exemple non imitatif, en comprimant l'air dans ladite chambre sous une pression de 21 bars, la température est portée à environ 400° C et la charge ou quantité d'eau introduite dans la chambre sera donc vaporisée instantanément. Cette charge est ensuite partiellement détendue à 8 bars se retrouvera approximativement à la température idéale de désinfection du sol à environ100° C.

La détente partielle produit un travail qui vient en déduction de l'énergie nécessaire à l'entraînement du générateur et permet d'améliorer considérablement le rendement de la machine.

Selon une variante de l'invention, des moyens, permettant d'ajuster la pression et la température de sortie du générateur, tels que clapets de décharge réglables sont installés sur le circuit d'échappement de la machine, l'air comprimé chaud et humide produit par le générateur est ensuite injecté dans le sol à la température choisie suffisamment élevée pour détruire les organismes pathologiques et suffisamment basse pour ne pas stériliser le sol.

Selon une variante de l'invention ladite chambre de compression et de vaporisation est équipée d'un dispositif volumétrique tel qu'un piston réglable permettant d'en modifier son volume afin de pouvoir régler la pression et la température de fin de compression.

Un dispositif électronique permet de gérer en fonction des différents paramètres le débit d'eau à vaporiser.

Préférentiellement, le générateur selon l'invention utilise le traîneau mobile VERDIVAP selon EP 1 479 287 A1 mais d'autres modes d'injection de l'air dans le sol tels que des plaques statiques, des herses perforées, des aiguilles perforées pourront être utilisées sans pour autant changer le principe de la présente invention.

L'invention s'applique tout particulièrement à la désinfection des terrains agricoles en profondeur et/ou en surface pour obtenir un effet herbicide fongicide et nématicide.

D'autres buts avantages et caractéristiques de l'invention apparaîtront à la lecture de la description, à titre non limitatif, d'un réalisation fait en regard des dessins où :
La figure 1 représente, vu schématiquement en coupe longitudinale un mode de réalisation du générateur d'air comprimé chaud humide selon l'invention dans sa phase aspiration et détente partielle
La figure 2 représente, vu schématiquement en coupe longitudinale le même générateur dans sa phase compression et échappement de l'air comprimé chaud humidifié vers le dispositif d'injection dans le sol.
La figure 3 représente, vu schématiquement en coupe longitudinale le générateur selon l'invention dans la phase fin de compression/début d'injection d'eau

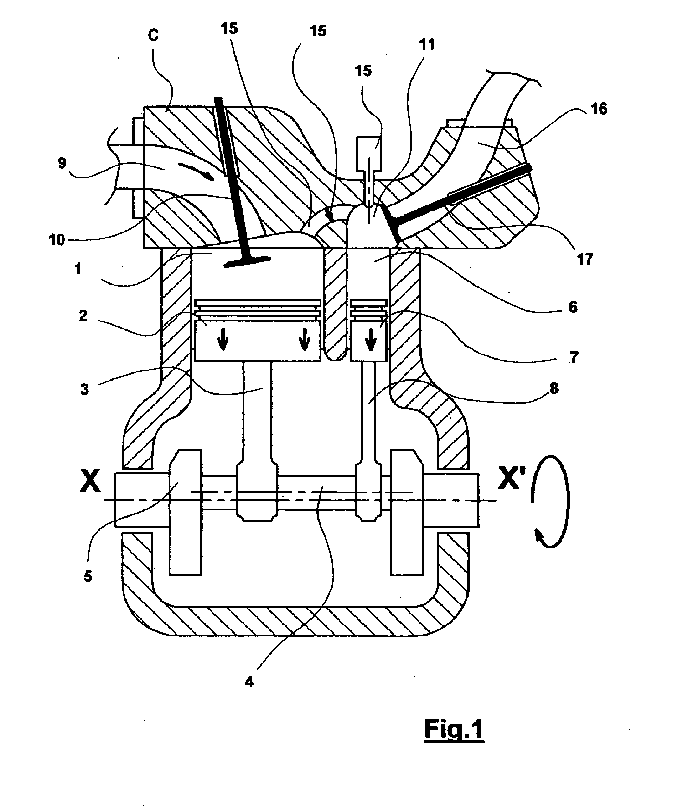

La figure 1 représente, vu schématiquement en coupe longitudinale un mode de réalisation du générateur d'air comprimé chaud humide où l'on peut voir le cylindre d'aspiration et de compression 1 de l'air atmosphérique dans lequel coulisse un piston 2 relié par une bielle 3 au maneton 4 d'un vilebrequin 5 monté rotatif sur son axe XX' ainsi que le cylindre de détente partielle 6 dans lequel coulisse un piston 7 relié par une bielle 8 au même maneton 4 du vilebrequin 5 tourillonnant sur son axe XX'. Les deux pistons 2 et 7 ont la même hauteur d'axe et fonctionnent en parallèle ayant leur point mort haut sensiblement sur le même plan. Sur cet ensemble mobile est monté une culasse C qui comporte une admission d'air atmosphérique 9 commandée par une soupape 10 une chambre 11 en regard du cylindre de détente partielle 6. Au-dessus du cylindre d'aspiration compression le plan de culasse réserve un espace minimum avec le sommet du piston et cet espace est relié par un conduit 13 commandé par un obturateur 14. La chambre est équipée d'un injecteur d'eau 15 et d'un conduit d'échappement 16 commandé par une soupape 17.

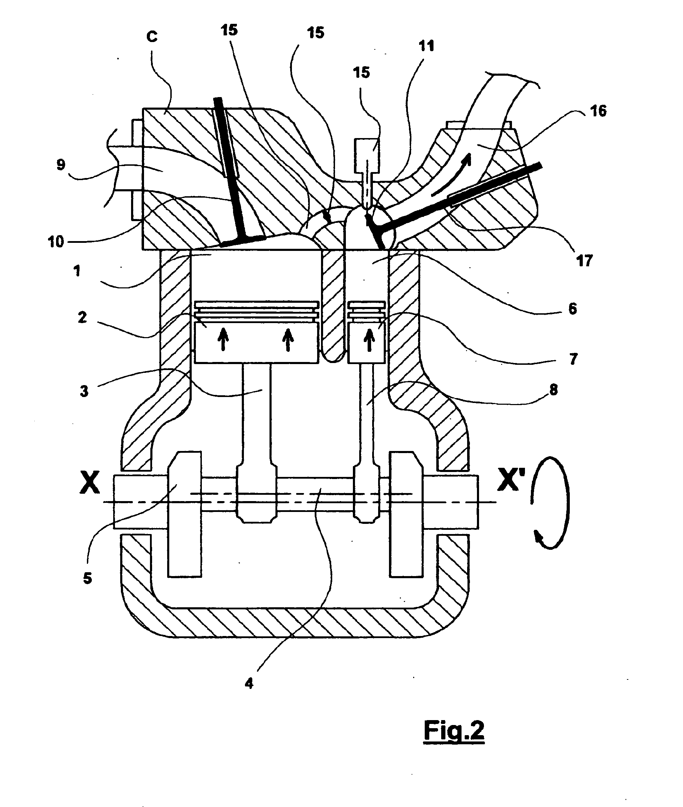

Le vilebrequin 5 est entraîné en rotation par un moteur non représenté ici et entraîne par son maneton 4, les pistons 2 et 7 ont entamé leur course descendante, figure 1, la soupape d'admission 10 est alors ouverte et de l'air atmosphérique à température ambiante est aspiré dans le cylindre 1. Après avoir franchi le point mort bas, les pistons 2 et 7 entament leur course montante - figure 2 - et le piston 2 comprime l'air admis au cycle précèdent dans la chambre 11 à travers le conduit 13, l'obturateur 14 ayant été ouvert et ayant mis en communication le dessus du piston 2 et la chambre 11.

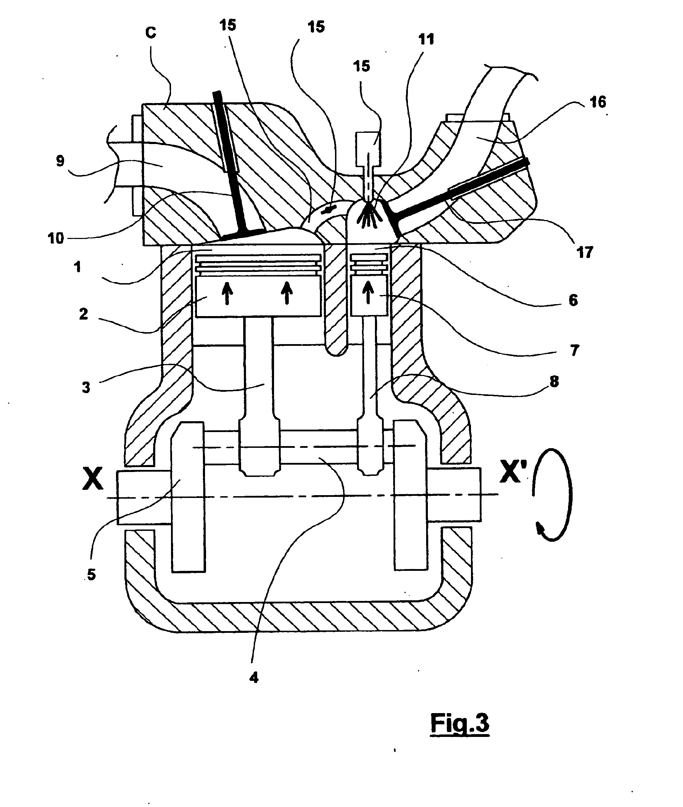

Sensiblement avant le point mort haut, figure 3, l'obturateur 14 est refermé et l'injecteur d'eau 15 commandé électroniquement injecte dans la chambre 11 une dose d'eau qui, sous l'effet de la température élevée due à la compression se vaporise instantanément. Après avoir franchi le point mort haut les pistons 2 et 7 commencent une nouvelle course descendante -figure 1- et la pression de l'air humide contenu dans la chambre 11 se détend partiellement dans le cylindre en repoussant le piston et produisant un travail, il est à noter que le diamètre du piston 7 est calculé de manière à ce que la détente de la charge à pression contenue dans la chambre 11 corresponde sensiblement à la pression et la température d'utilisation choisie. Après avoir franchi le point mort bas les pistons 1 et 2 commencent leur course ascendante et la soupape d'échappement 17 est ouverte pour permettre l'évacuation de l'air comprimé chaud et humide à la température d'utilisation choisie qui est alors dirigé vers l'appareil destiné à l'injecter dans le sol.

Le dispositif décrit ci-dessus utilise un système bielle manivelle conventionnel aux moteurs à pistons bien connus, il est donné à titre d'exemple, et de nombreux systèmes volumétriques peuvent être utilisés pour obtenir le même cycle thermodynamique et les mêmes résultats sans pour cela changer l'invention qui vient d'être décrite.

L'invention n'est pas limitée aux exemples de réalisations décrits et représentés : les matériaux, les moyens de commande, les dispositifs décrits peuvent varier dans la limite des équivalents, pour produire les mêmes résultats, le nombre de cylindres du générateur, les moyens d'introduction de l'air comprimé chaud et humide dans le sol peuvent varier, sans pour cela changer l'invention qui vient d'être décrite.

## Revendications

1. Procédé de désinfection des sols **caractérisé en ce qu'**il consiste successivement à :
- produire de l'air chaud comprimé par compression d'air dans une machine volumétrique,
- humidifier l'air chaud ainsi produit par injection de liquide dans l'air chaud comprimé,
- injecter l'air chaud comprimé ainsi humidifié dans le sol.

2. Procédé de désinfection des sols selon la revendication 1 **caractérisé en ce que** le débit de liquide injecté dans l'air chaud comprimé est réglable afin de permettre d'en régler le taux d'humidité de l'air chaud comprimé humidifié.

3. Dispositif pour la mise en oeuvre du procédé de désinfection des sols selon l'une des revendications précédentesse présentant sous forme d'un traineau mobile tracté, permettant une bonne homogénéité de diffusion, un chassis destiné à être placé sur le sol, des dents destinées à pénéter dans le sol, **caractérisé en ce qu'**il comprend :
- un générateur constitué d'une chambre de compression (11) dans laquelle de l'air atmosphérique, après avoir été aspiré et comprimé par un piston (2), est porté à une pression permettant d'augmenter sa température ; dans laquelle (11) de l'eau est ensuite injectée (15) lorsque la température de l'air comprimé est suffisante pour vaporiser la quantité d'eau injectée ; l'air chaud, comprimé et humidifié étant alors détendu partiellement avec travail repoussant un piston (7) dans un cylindre (6) de façon à atteindre la pression et la température d'utilisation, pour obtenir de l'air chaud comprimé et humidifié prêt à être évacué lors de la remontée du piston (7) à travers un échappement (16) et injecté dans le sol,
- un chassis destiné à être placé sur le sol et relié au générateur par des tuyaux
- des dents destinées à pénétrer dans le sol et à diffuser l'air chaud comprimé et humidifié.

4. Dispositif pour la mise en oeuvre du procédé de désinfection des sols selon la revendication 3 **caractérisé en ce que** la quantité d'eau injectée dans la chambre (11) est réglable et permet de doser le taux d'humidité absolu de l'air chaud comprimé et humidifié.

5. Dispositif pour la mise en oeuvre du procédé de désinfection des sols selon la revendication 4, **caractérisé en ce que** le système de réglage de la quantité d'eau injectée est piloté par électronique.

6. Dispositif pour la mise en oeuvre du procédé de désinfection des sols selon les revendications 3 à 5 **caractérisé en ce que** la chambre (11) est équipée d'un dispositif volumétrique tel qu'un piston réglable permettant d'en modifier son volume afin de pouvoir régler la pression et la température de fin de compression.

7. Procédé de désinfection des sols par utilisation du dispositif selon l'une quelconque des revendications 3 à 6 **caractérisé en ce qu'**il comporte le cycle thermodynamique selon les étapes suivantes :
- aspiration de l'air atmosphérique
- compression de l'air aspiré à une température supérieure
- injection d'eau et vaporisation de l'eau injectée
- détente partielle polytropique avec travail à pression et température d'usage
- échappement et injection dans le sol.

## Claims

1. A method of disinfecting the ground, **characterized in that** it consists, in succession, in:
- producing compressed hot air by compressing air in a positive-displacement machine,
- humidifying the hot air thus produced by injecting liquid into the compressed hot air,
- injecting the compressed hot air thus humidified into the ground.

2. The method of disinfecting the ground as claimed in claim 1, **characterized in that** the flow rate of liquid injected into the compressed hot air can be adjusted so that the moisture content of the humidified compressed hot air can be adjusted.

3. A device for implementing the method of disinfecting the ground as claimed in one of the preceding claims and in the form of a trailed mobile trailer, allowing good uniformity of diffusion, a chassis intended to be placed on the ground, tines intended to penetrate into the ground, and **characterized in that** it comprises:
- a generator consisting of a compression chamber (11) in which atmospheric air, having been aspirated and compressed by a piston (2), is raised to a pressure that will increase its temperature; into which chamber (11) water is then injected (15) when the compressed-air temperature is high enough to vaporize the amount of water injected; the compressed and humidified hot air then being partially expanded producing work driving back a piston (7) in a cylinder (6) so as to reach the service pressure and temperature, in order to obtain compressed and humidified hot air ready to be discharged through an exhaust (16) and injected into the ground as the piston (7) rises back up,
- a chassis intended to be placed on the ground and connected to the generator by pipes
- tines intended to penetrate the ground and diffuse the compressed and humidified hot air.

4. The device for implementing the method of disinfecting the ground as claimed in claim 3, **characterized in that** the amount of water injected into the chamber (11) can be adjusted so as to regulate the absolute moisture content of the compressed and humidified hot air.

5. The device for implementing the method of disinfecting the ground as claimed in claim 4, **characterized in that** the system for adjusting the amount of water injected is electronically controlled.

6. The device for implementing the method of disinfecting the ground as claimed in claims 3 to 5, **characterized in that** the chamber (11) is equipped with a positive-displacement device such as an adjustable piston so that its volume can be altered in order to be able to adjust the pressure and temperature reached at the end of compression.

7. A method of disinfecting the ground by using the device as claimed in any one of claims 3 to 6, **characterized in that** it uses a thermodynamic cycle comprising the following steps:
- aspiration of atmospheric air
- compression of the aspirated air to a higher temperature
- injection of water and vaporization of the injected water
- polytropic partial expansion with work to the service pressure and temperature
- exhaust and injection into the ground.

## Patentansprüche

1. Verfahren zur Desinfektion von Böden, **dadurch gekennzeichnet, dass** es nacheinander aus den folgenden Schritten besteht:
- Erzeugen von heißer Druckluft durch das Komprimieren von Luft in einer volumetrischen Maschine,
- Anfeuchten der auf diese Art und Weise erzeugten, heißen Luft durch Einspritzen von Flüssigkeit in die heiße Druckluft,
- Einspritzen der auf diese Art und Weise angefeuchteten, heißen Druckluft in den Boden.

2. Verfahren zur Desinfektion von Böden nach Anspruch 1, **dadurch gekennzeichnet, dass** die Durchsatzmenge der Flüssigkeit, die in die heiße Druckluft eingespritzt wird, verstellbar ist, um **dadurch** den Grad der Feuchtigkeit der feuchten und heißen Druckluft regulieren zu können.

3. Vorrichtung zur Durchführung des Verfahrens zur Desinfektion von Böden nach einem der vorhergehenden Ansprüche, die in Form eines beweglichen Zugschlittens, der eine gute Homogenität der Verbreitung ermöglicht, folgendes aufweist: einen Rahmen, der auf dem Boden platziert wird; Zähne oder Zacken, die in den Boden eindringen sollen, **dadurch gekennzeichnet, dass** sie folgendes besitzt:
- einen Generator, der aus einer Kompressionskammer (11) besteht, in der atmosphärische Luft - nachdem sie angesaugt und durch einen Kolben (2) komprimiert worden ist - auf einen Druck gebracht wird, der es erlaubt, ihre Temperatur zu erhöhen; in die (11) anschließend Wasser eingespritzt (15) wird, wenn die Temperatur der Druckluft ausreicht, um die Menge des eingespritzten Wassers zu verdampfen; wobei die feuchte und heiße Druckluft dann teilweise entspannt wird, indem ein Kolben (7) in einem Zylinder (6) so zurückgestoßen wird, dass der Einsatzdruck und die Einsatztemperatur erreicht werden, um feuchte und heiße Druckluft zu erhalten, die bei Wiederhochziehen des Kolbens (7) bereit ist, durch einen Austritt (16) abgeführt und in den Boden eingespritzt zu werden,
- einen Rahmen, der auf dem Boden platziert wird, und über Rohre mit dem Generator verbunden ist
- Zähne oder Zacken, die in den Boden eindringen und die feuchte und heiße Druckluft verteilen sollen.

4. Vorrichtung zur Durchführung des Verfahrens zur Desinfektion von Böden nach Anspruch 3, **dadurch gekennzeichnet, dass** die Menge an Wasser, die in die Kammer (11) eingespritzt wird, verstellbar ist, so dass der absolute Feuchtigkeitsgrad der feuchten und heißen Druckluft dosiert werden kann.

5. Vorrichtung zur Durchführung des Verfahrens zur Desinfektion von Böden nach Anspruch 4, **dadurch gekennzeichnet, dass** das System zur Einstellung der eingespritzten Wassermenge elektronisch gesteuert wird.

6. Vorrichtung zur Durchführung des Verfahrens zur Desinfektion von Böden nach den Ansprüchen 3 bis 5, **dadurch gekennzeichnet, dass** die Kammer (11) mit einer volumetrischen Vorrichtung wie einem verstellbaren Kolben ausgestattet ist, mit dem sich das Volumen verändern lässt, so dass man den Druck und die Temperatur am Ende der Kompression einstellen kann.

7. Verfahren zur Desinfektion von Böden durch Verwendung der Vorrichtung nach einem der Ansprüche 3 bis 6, **dadurch gekennzeichnet, dass** es den thermodynamischen Zyklus entsprechend der folgenden Schritte aufweist:
- Ansaugen von atmosphärischer Luft
- Komprimierung der angesaugten Luft auf eine höhere Temperatur
- Einspritzen von Wasser und Verdampfen des eingespritzten Wassers
- partielle, polytrope Entspannung bei Einsatzdruck und Einsatztemperatur
- Austreten und Einspritzen in den Boden.
